# EUROPÄISCHE PATENTSCHRIFT

(11) **EP 0 865 372 B1**
(45) Veröffentlichungstag und Bekanntmachung des Hinweises auf die Patenterteilung: **04.07.2001**
(21) Anmeldenummer: 96943064.4
(22) Anmeldetag: 09.12.1996
(51) Int. Cl.: B60T 13/52

(54) **BREMSKRAFTVERSTÄRKER UND MONTAGEVERFAHREN HIERFÜR**
BRAKE SERVO UNIT AND METHOD OF ASSEMBLING SAID UNIT
SERVOFREIN ET PROCEDE DE MONTAGE CORRESPONDANT

(30) Priorität: 08.12.1995 DE 19545947
(43) Veröffentlichungstag der Anmeldung: 23.09.1998
(73) Patentinhaber: Lucas Industries Limited, London W1Y 4DJ (GB)
(72) Erfinder: PREKER, Gerd, D-56075 Koblenz (DE)
(74) Vertreter: Beyer, Andreas, Dr.
(86) Internationale Anmeldenummer: EP9605498
(87) Internationale Veröffentlichungsnummer: WO9721572

(56) Entgegenhaltungen:
- DE-A- 2 163 587
- DE-A- 3 941 604
- DE-A- 4 208 384
- DE-A- 4 317 490

## Beschreibung

Die Erfindung betrifft einen Bremskraftverstärker nach dem Oberbegriff des Anspruchs 1 und ein Montageverfahren für einen Bremskraftverstärker.

Fahrzeugbremsanlagen sind heutzutage in aller Regel mit einem Bremskraftverstärker ausgerüstet, der zumindest bei Personenwagen zumeist als Unterdruckbremskraftverstärker ausgeführt ist und der dazu dient, die von einem Fahrer aufzubringende Bremsbetätigungskraft auf einem komfortablen, d.h. relativ niedrigen Niveau zu halten. Ein solcher Bremskraftverstärker besteht aus einer Vielzahl von Einzelteilen, von denen jedes toleranzbehaftet ist. Es läßt sich deshalb nicht vermeiden, daß im Bremskraftverstärker entlang des Betätigungsweges Längentoleranzen auftreten, die ausgeglichen werden müssen, um bei einer Serie von Bremskraftverstärkern eine gleichbleibende Charakteristik zu gewährleisten. Besonders kritisch ist diesbezüglich ein Maß zwischen einem beispielsweise als Ventilkolben ausgebildeten Eingangsglied des Bremskraftverstärkers und einem sich in Betätigungsrichtung daran anschließenden Kraftübermittlungsglied, das häufig eine Scheibe aus Elastomermaterial ist und dann als Reaktionsscheibe bezeichnet wird. Das vorgenannte Maß zwischen dem Eingangsglied und der Reaktionsscheibe wird unter Fachleuten auch als z-Maß bezeichnet. Es bestimmt ganz wesentlich das auch Einsprungverhalten genannte Verhalten eines Bremskraftverstärkers in der Anfangsphase einer Bremsbetätigung. Ist das z-Maß klein, so spricht die Fahrzeugbremsanlage bei einer vorgegebenen Bremsbetätigungskraft weniger stark an als bei einem größeren z-Maß. Schon kleine Änderungen des z-Maßes führen zu spürbaren Änderungen des Ansprechverhaltens des Bremskraftverstärkers, weshalb an dieser Stelle ein möglichst guter Toleranzausgleich wünschenswert ist, um eine geforderte Charakteristik auch in der Serienfertigung zuverlässig einhalten zu können.

Ein weiteres wichtiges Maß ergibt sich zwischen dem Ausgangsglied eines Bremskraftverstärkers und einer nachgeschalteten Baugruppe, beispielsweise einem Hauptbremszylinder. Auch hier führen die unvermeidbaren Längentoleranzen zu mehr oder weniger großen Leerwegen, die in unerwünschter Weise das Verhalten der Bremsanlage während einer Betätigung beeinflussen.

Zur Erzielung eines Toleranzausgleichs sind zwei unterschiedliche Methoden vorgeschlagen worden, die beide in der Praxis Anwendung finden. Die erste Methode stellt durch Messungen am teilweise zusammengebauten Bremskraftverstärker die Abweichung zwischen einem Ist- und einem Sollmaß fest und sorgt dann durch Verwendung entsprechender Distanzausgleichsstücke, beispielsweise Distanzscheiben, dafür, daß eine vorgegebene Sollänge möglichst genau angenähert wird. Dies setzt voraus, daß die distanzausgleichenden Stücke, Scheiben, Ringe oder ähnliches in einer relativ großen Zahl abgestufter Größen zur Verfügung stehen. Dennoch ist auf diese Weise immer nur eine Annäherung an das gewünschte Maß erreichbar. Desweiteren ist der Einbau dieser distanzausgleichenden Mittel während der Montage eines Bremskraftverstärkers aufgrund der erforderlichen Kontrollen der eingebauten Dicken und eventuell auch der Einbaulage zeitaufwendig und damit kostspielig. Müssen mehrere Distanzscheiben oder -ringe verwendet werden, kann es aufgrund der unvermeidbaren Welligkeit dieser Teile auch dazu kommen, daß ein Federsystem entsteht, das die Charakteristik des Bremskraftverstärkers bzw. der Bremsanlage wiederum in unerwünschter Weise beeinflußt.

Die zweite Methode besteht darin, bestimmte Teile entlang des Betätigungsweges des Bremskraftverstärkers längeneinstellbar zu gestalten, um nachträglich eine bestimmte Sollänge einstellen zu können. Eine solche Lösung ist beispielsweise aus der DE 42 08 384 A1 bekannt. Um eine Längeneinstellung des längenveränderbaren Bauteils auch dann vornehmen zu können, wenn der Bremskraftverstärker bereits in ein Fahrzeug eingebaut ist, schlägt die DE 43 17 490 A1 eine rohrförmige Hülse mit einer Verlängerung vor, die ein Verdrehen der Hülse und eines damit gekoppelten Teils eines mehrteiligen Ventilkolbens ermöglicht. Die für einen Distanzausgleich vorzunehmenden Einstellarbeiten sind ebenfalls zeitaufwendig und wirken sich zusammen mit dem ohnehin höheren Preis für ein längeneinstellbares Bauteil kostensteigernd auf die Produktion eines Bremskraftverstärkers aus.

Der Erfindung liegt die Aufgabe zugrunde, einen Bremskraftverstärker anzugeben, bei dem die Länge des Eingangsgliedes und/oder des Ausgangsgliedes möglichst genau der geforderten Sollänge entspricht. Der Erfindung liegt auch die Aufgabe zugrunde, ein Montageverfahren für einen Bremskraftverstärker anzugeben, das es auf kostengünstige Weise ermöglicht, einen Bremskraftverstärker herzustellen, dessen Eingangsglied und/oder dessen Ausgangsglied in ihrer Länge möglichst genau der geforderten Sollänge entsprechen.

Diese Aufgabe ist erfindungsgemäß mit einem Bremskraftverstärker gelöst, bei dem die Länge des Eingangsgliedes und/oder des Ausgangsgliedes durch Druckumformung seines Materials auf eine Sollänge kalibriert ist. Beim erfindungsgemäßen Bremskraftverstärker ist die Länge des Eingangsgliedes und/oder des Ausgangsgliedes also nicht nur der geforderten Sollänge angenähert, sondern sie entspricht der geforderten Sollänge. Das bedeutet, daß jeder Bremskraftverstärker einer Serie ein Eingangsglied und/oder ein Ausgangsglied aufweist, dessen Länge genau auf diesen einen Bremskraftverstärker abgestimmt ist.

Mit Druckumformung ist im Rahmen der vorliegenden Erfindung eine Materialumformung durch Pressen oder auch durch Schlagen gemeint, die insbesondere an der Oberfläche des umgeformten Materialabschnitts zu einer Materialverdichtung und damit zu einer höheren Verschleißfestigkeit führt. Erfindungsgemäß wird von dem Eingangsglied oder dem Ausgangsglied also kein Material entfernt, sondern das vorhandene Material wird durch Druck so umgeformt, daß die gewünschte Kalibrierung erzielt wird.

Die vorgenannte Aufgabe ist auch durch ein Montageverfahren für einen Bremskraftverstärker gelöst, das die im Anspruch 9 genannten Schritte umfaßt. Dieses Montageverfahren eignet sich besonders zum Kalibrieren von Metallteilen, denn die Metallteile werden durch das Umformen definiert gestaucht und so auf ein der Sollänge entsprechendes Maß gebracht. Gegenüber herkömmlichen Montageverfahren für Bremskraftverstärker müssen beim erfindungsgemäßen Montageverfahren keine unterschiedlich dimensionierten, distanzausgleichenden Bauteile mehr vorgehalten werden, sondern das Eingangsglied und/oder das Ausgangsglied selbst werden in einer Kalibrierstation in Abhängigkeit der für einen bestimmten Bremskraftverstärker ermittelten Maße durch Materialumformung mittels Druck auf genau die geforderte Sollänge gebracht. Hierzu werden Eingangsglieder und/oder Ausgangsglieder bereitgestellt, deren Länge mindestens einer größtmöglichen Sollänge entspricht. Die Kalibrierstation umfaßt eine Presse, mit der die Umformung des entsprechenden Teiles schnell und genau vorgenommen wird.

Bei einer bevorzugten Ausführungsform des erfindungsgemäßen Montageverfahrens ist die Umformkraft eine Funktion der Differenz zwischen dem ermittelten Istmaß und dem vorgegebenen Sollmaß.

Besonders bevorzugt sind das Eingangsglied und/oder das Ausgangsglied des Bremskraftverstärkers mehrteilig ausgebildet, so daß nur ein Endabschnitt des Eingangsgliedes oder des Ausgangsgliedes dem Kalibriervorgang unterworfen werden muß. Beispielsweise kann das Eingangsglied des Bremskraftverstärkers als Betätigungs- bzw. Ventilkolben ausgeführt sein, dessen der Reaktionsscheibe zugewandter Endabschnitt als separate Fühlscheibe ausgebildet ist. Kalibriert zu werden braucht dann nur diese Fühlscheibe. Ebenso kann das Ausgangsglied des Bremskraftverstärkers als Reaktionskolben ausgeführt sein, dessen freies Ende, d.h. das einem Hauptzylinder zugewandte Ende, als separates Kopfteil ausgebildet ist, so daß nur dieses Kopfteil kalibriert zu werden braucht.

Bevorzugt wird der Kalibriervorgang so durchgeführt, daß sich die Gestalt des freien Endes des Eingangsgliedes oder des Ausgangsgliedes nicht oder jedenfalls nicht wesentlich ändert. Weist also beispielsweise das der Reaktionsscheibe zugewandte Ende einer Fühlscheibe oder das dem Hauptzylinder zugewandte Ende des separaten Kopfteiles eine bestimmte Gestalt auf, so soll diese Gestalt durch den Kalibriervorgang möglichst nicht verändert werden. Für das Umformen bedeutet dies, daß der auf das zu kalibrierende Teil schlagende oder drückende Pressenstempel entsprechend der Gestalt der ihm zugewandten Endfläche des zu kalibrierenden Teiles geformt ist.

Vorteilhaft ist beim erfindungsgemäßen Montageverfahren die Kalibrierstation so ausgestaltet, daß sie das Eingangsglied und/oder das Ausgangsglied automatisch entsprechend der Differenz zwischen Ist- und Sollmaß auf die Sollänge kalibriert und anschließend zum Einbau zur Verfügung stellt. Dies läßt sich beispielsweise dadurch erreichen, daß die Kalibrierstation über eine Recheneinheit mit einer Meßvorrichtung verbunden ist, so daß ihr zeitnah zu dem Meßvorgang die sich daraus ergebenden Daten zur Verfügung stehen. Die zu kalibrierenden Teile lassen sich beispielsweise mit einem Schwingförderer zur Kalibrierstation befördern und die kalibrierten Teile können aus der Kalibrierstation über beispielsweise eine Rinne an den Montageplatz des Bremskraftverstärkers transportiert werden.

Damit bei einem erfindungsgemäßen Bremskraftverstärker ein als Fühlscheibe ausgebildeter, separater Endabschnitt des Eingangsgliedes durch Umformen, insbesondere Stauchen, kalibriert werden kann, hat die Fühlscheibe wenigstens eine Materialaussparung, die so angeordnet ist, daß sich eine Längenänderung der Fühlscheibe durch Umformen derselben erzielen läßt, ohne daß sich der Durchmesser der Fühlscheibe ändert. Bevorzugt besteht eine solche Materialaussparung in einer kreisringförmigen Ausnehmung im Boden der Fühlscheibe, in die beim Zusammenpressen der Fühlscheibe im Rahmen des Kalibriervorganges das Material ausweichen kann.

Ist bei einem erfindungsgemäßen Bremskraftverstärker das Ausgangsglied mehrteilig ausgebildet, beispielsweise in Gestalt eines Reaktionskolbens mit einem separaten Reaktionskolbenkopf, so weist bevorzugt der Kopf des Reaktionskolbens eine als Ringbund ausgebildete Basis auf, deren Durchmesser größer ist als der Durchmesser der übrigen Abschnitte des Kopfes. Diese Basis wird während des Umformens in der Presse vollständig umfangen, so daß keine Durchmesseränderung der Basis auftreten kann. Gleichzeitig können so im Rahmen des Umformvorgangs auftretende Kräfte auch radial abgeleitet werden, wodurch eine Rißbildung im Bereich der Basis vermieden wird. Darüberhinaus ist durch den Durchmesser des Ringbundes eine Grenze bezüglich der maximal erlaubten Verformung festgelegt, denn eine Umformung des Kopfes im Zuge der Kalibrierung darf nicht dazu führen, daß der Durchmesser der übrigen Abschnitte des Kopfes nach der Umformung größer als der Ringbunddurchmesser ist.

Generell ist beim erfindungsgemäßen Bremskraftverstärker bzw. beim erfindungsgemäßen Montageverfahren also darauf zu achten, daß die Kalibrierung des Eingangsgliedes und/oder des Ausgangsgliedes des Bremskraftverstärkers lediglich durch eine Längenänderung der entsprechenden Bauteile erfolgt und daß der Durchmesser sich dabei nicht ändert. Nur wenn es unvermeidlich ist, darf sich der Durchmesser in genau definierten und für die Funktion des Bremskraftverstärkers unkritischen Bereichen im Rahmen des Kalibriervorgangs ändern.

Ein bevorzugtes Ausführungsbeispiel eines erfindungsgemäßen Bremskraftverstärkers und ein Montageverfahren für diesen Bremskraftverstärker wird im folgenden anhand der beigefügten Figuren näher erläutert. Es zeigt:
- Fig.1: einen Teilschnitt durch einen Unterdruckbremskraft verstärker, der eine separat ausgebildete Fühlscheibe und einen separaten Reaktionskolbenkopf aufweist,
- Fig.2: die Seitenansicht eines nicht kalibrierten Reaktionskolbenkopfes,
- Fig.3: die Seitenansicht des Reaktionskolbenkopfes aus Fig.2 in einem kalibrierten Zustand, der durch eine geringe Umformung erreicht wurde,
- Fig.4: die Seitenansicht des Reaktionskolbenkopfes aus Fig.2 in einem kalibrierten Zustand, der durch eine maximal erlaubte Umformung erreicht wurde,
- Fig.5: eine Kalibrierstation zur Kalibrierung eines Reaktionskolbenkopfes gemäß Fig.2 mittels Umformen,
- Fig.6: eine zur Kalibrierung mittels Umformen ausgestaltete Fühlscheibe im Schnitt, und
- Fig.7: eine Kalibrierstation zum Kalibrieren einer Fühlscheibe gemäß Fig.6 mittels Umformen.

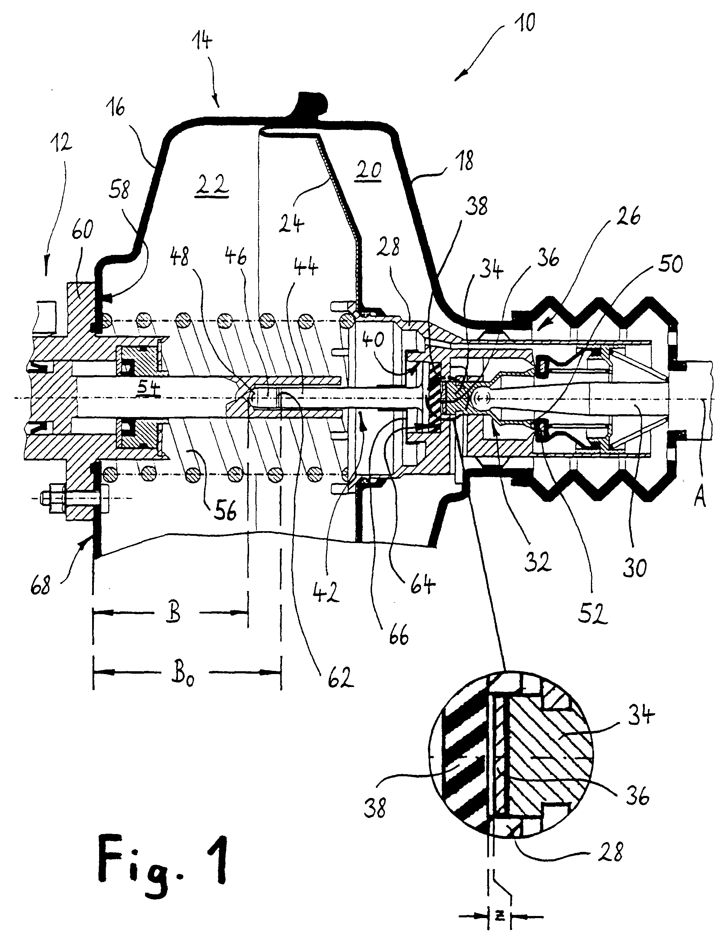

Fig. 1 zeigt einen allgemein mit 10 bezeichneten Unterdruckbremskraftverstärker für eine Fahrzeugbremsanlage, dem ein Hauptbremszylinder 12 nachgeschaltet ist, der im folgenden nur als Hauptzylinder bezeichnet wird.

Der Bremskraftverstärker 10 hat ein im wesentlichen zu einer Achse A rotationssymmetrisches Gehäuse 14, das aus zwei halbschalenförmigen Gehäuseteilen 16 und 18 zusammengesetzt ist. Im Gehäuse 14 sind eine Arbeitskammer 20 und eine Unterdruckkammer 22 durch eine bewegliche Wand 24 gebildet, die die beiden Kammern 20 und 22 gasdicht voneinander trennt. Im Betriebszustand ist die Unterdruckkammer 22 ständig mit einer Unterdruckquelle verbunden, während die Arbeitskammer 20 wahlweise mit der Unterdruckquelle oder dem Atmosphärendruck verbindbar ist. Zu diesem Zweck ist eine Steuerventilanordnung 26 vorhanden, deren Gehäuse 28 mit der beweglichen Wand 24 zur gemeinsamen Relativbewegung bezüglich des Gehäuses 14 des Bremskraftverstärkers 10 verbunden ist.

Auf die Steuerventilanordnung 26 wirkt das im gezeigten Beispiel kugelig ausgeführte Ende eines stangenförmigen Betätigungsgliedes 30, dessen anderes hier nicht dargestelltes Ende mit dem Bremspedal der Fahrzeugbremsanlage verbunden wird. Die bei einer Betätigung der Bremsanlage vom Fahrer auf das Bremspedal ausgeübte Betätigungskraft wird über das Betätigungsglied 30 in ein längs der Achse A verschiebliches Eingangsglied 32 eingeleitet, das im gezeigten Ausführungsbeispiel aus einem Ventilkolben 34 und einer sich in Betätigungsrichtung axial daran anschließenden, separaten Fühlscheibe 36 besteht.

Die Fühlscheibe 36 steht in Kontakt mit einem Kraftübermittlungsglied, das im dargestellten Ausführungsbeispiel durch eine Reaktionsscheibe 38 aus einem Elastomermaterial gebildet ist, die in einer stirnseitigen Ausnehmung 40 des Gehäuses 28 der Steuerventilanordnung 26 aufgenommen ist. An die Reaktionsscheibe 38 schließt sich in Betätigungsrichtung des Bremskraftverstärkers axial ein Ausgangsglied 42 an, das hier durch einen im Längsschnitt T-förmigen Reaktionskolben 44 und einen damit verbundenen, separaten Reaktionskolbenkopf 46 mit einem freien, halbkugeligen Ende 48 gebildet ist.

Wird eine Betätigungskraft über das Betätigungsglied 30 in das Eingangsglied 32 eingeleitet, so verschiebt sich letzteres in Fig. 1 nach links, wodurch ein am Ventilkolben 34 ausgebildeter Ventilsitz 50 von einem Ventilschließglied 52 abhebt und auf diese Weise eine Zufuhr von Atmosphärendruck in die Arbeitskammer 20 ermöglicht. Gleichzeitig dringt die Fühlscheibe 36 in die gummielastische Reaktionsscheibe 38 ein. Aufgrund der Zufuhr von Atmosphärendruck in die Arbeitskammer 20 verschiebt sich die bewegliche Wand 24 zusammen mit dem Gehäuse 28 der Steuerventilanordnung 26 nach links und überträgt eine verstärkte Betätigungskraft auf das Ausgangsglied 42, welches seinerseits diese Kraft über das halbkugelige Ende 48 des Reaktionskolbenkopfes 46 auf einen Primärkolben 54 des Hauptzylinders 12 weiterleitet. Eine Schraubendruckfeder 56, die im Gehäuse 14 des Bremskraftverstärkers 10 eingespannt ist, dient nach einer Beendigung eines Bremsvorganges zur Rückstellung der beweglichen Wand 24 in die in Fig. 1 wiedergegebene Ausgangsstellung, in der die beiden Kammern 20 und 22 durch die Steuerventilanordnung 26 voneinander getrennt sind. Die Funktion und der Aufbau des Bremskraftverstärkers 10 entspricht insoweit üblichen Bremskraftverstärkern dieser Bauart und braucht deshalb nicht weiter erläutert zu werden.

Ein für die Funktion des Bremskraftverstärkers 10 wichtiges Maß, welches insbesondere das auch Einsprungverhalten genannte Ansprechverhalten des Bremskraftverstärkers wesentlich beeinflußt, ist das aus Fig. 1 ersichtliche, sogenannte z-Maß, also der Abstand zwischen der Fühlscheibe 36 und der Reaktionsscheibe 38. Von Fahrzeugherstellern wird für jedes Fahrzeugmodell ein bestimmtes z-Maß vorgegeben, mit dem die vom Fahrzeughersteller gewünschte Bremskraftverstärkercharakteristik erreicht wird. Ein größeres z-Maß steht dabei für ein schnelles und kräftiges Ansprechen des Bremskraftverstärkers 10, während ein kleineres z-Maß (auch z = 0 möglich) die gegenteilige Wirkung hat.

Ein weiteres wichtiges Funktionsmaß des Bremskraftverstärkers 10 ist das ebenfalls aus Fig. 1 ersichtliche Maß B, also der Abstand zwischen dem Ende des Ausgangsgliedes 42, das hier durch das halbkugelige Ende 48 des Reaktionskolbenkopfes 46 gebildet ist, und der dem Bremskraftverstärker 10 zugewandten Fläche 58 eines Befestigungsflansches 60 des Hauptzylinders 12. Die axiale Position des freien, halbkugeligen Endes 48 in Bezug auf die vorgenannte Anlagefläche 58 bestimmt im fertigmontierten Zustand der Bremskraftverstärker/Hauptzylinder-Einheit maßgeblich die axiale Position des Primärkolbens 54 im Hauptzylinder 12 und damit auch den vorhandenen Leerweg, d.h. den Weg, den der Primärkolben 54 in der Längsbohrung des Hauptzylinders 12 bis zum Beginn eines Druckaufbaus zurücklegen muß. Schon kleinste Unterschiede in der axialen Position des Ausgangsgliedes 42 wirken sich deutlich spürbar aus, da aufgrund der vorhandenen mechanischen Übersetzung ein gegebener Leerweg im Bremskraftverstärker in einem entsprechend größeren Leerweg am Bremspedal resultiert.

Aufgrund der unvermeidbaren Herstellungstoleranzen der Teile des Bremskraftverstärkers 10 ergeben sich entlang seines Betätigungsweges Längentoleranzen, die beim Zusammenbau eines jeden Bremskraftverstärkers 10 zu einem unterschiedlichen z-Maß bzw. einem unterschiedlichen Maß B führen würden. Vor dem endgültigen Zusammenbau müssen daher diese Längentoleranzen soweit wie möglich beseitigt werden, um sicherzustellen, daß das geforderte z-Maß bzw. das geforderte Maß B und damit die gewünschte Bremskraftverstärkercharakteristik bei jedem Bremskraftverstärker eine Serie eingehalten wird. Bei dem dargestellten Ausführungsbeispiel wurde dies bisher dadurch erreicht, daß zum einen verschieden dicke Fühlscheiben 36 bereitgestellt waren, so daß je nach der sich ergebenden Längentoleranz eine dickere oder dünnere Fühlscheibe 36 zum Ausgleich dieser Längentoleranz eingebaut wurde, um sich dem geforderten z-Maß so gut wie möglich anzunähern. Zum anderen gelangten, wie ebenfalls aus Fig. 1 ersichtlich, zwischen dem Reaktionskolben 44 und dem Reaktionskolbenkopf 46 eine oder mehrere Distanzscheiben 62 zum Einbau, die ebenfalls in verschiedenen Dicken bereitgestellt waren.

Diese Bereitstellung unterschiedlich dicker Distanzscheiben 62 bzw. Fühlscheiben 36 ist erfindungsgemäß nicht mehr notwendig. Stattdessen werden die jeweiligen Endabschnitte des Eingangsgliedes 32 bzw. des Ausgangsgliedes 42, also die Fühlscheibe 36 bzw. der Reaktionskolbenkopf 46 in einer Länge bereitgestellt, die dazu ausreicht, zumindest die jeweils maximal erforderliche Sollänge des Eingangsgliedes (32) bzw. des Ausgangsgliedes 42 zu erreichen. Sodann werden die Fühlscheibe 36 und der Reaktionskolbenkopf 46 in einer Presse einer Materialumformung unterzogen, die zu einer Längenverkürzung führt. Die Längenverkürzung erfolgt dabei in Abhängigkeit der zuvor ermittelten Längentoleranzen eines bestimmten Bremskraftverstärkers 10 nur soweit, daß sich nach einem Einbau des durch die Materialumformung längenverkürzten Reaktionskolbenkopfes 46 bzw. der Fühlscheibe 36 genau das gewünschte Maß B bzw. das geforderte z-Maß einstellt. Der Umformvorgang geht kontinuierlich vor sich indem ein Antriebsmotor der Presse eine Pressenspindel wegabhängig gesteuert dreht. Nach Erreichen der vorgegebenen Längenverkürzung, die über eine Wegmessung festgestellt wird, wird der Antriebsmotor gestoppt.

Beim Zusammenbau des Bremskraftverstärkers 10 wird hierzu wie folgt vorgegangen: Zunächst wird die Steuerventilanordnung 26 ohne Fühlscheibe 36, Reaktionsscheibe 38 und Reaktionskolben 44 in das in Fig. 1 rechte halbschalenförmige Gehäuseteil 18 des Bremskraftverstärkergehäuses 14 eingesetzt und in eine nicht näher dargestellte Aufnahmevorrichtung eingespannt. Dann wird mit einer Meßvorrichtung der axiale Abstand zwischen dem Ventilkolben 34 und einer ersten Bezugsfläche 64 bestimmt. Dieses Maß stellt das Istmaß dar, aus welchem sich durch Subtraktion des vorgegebenen z-Maßes, daß das Sollmaß darstellt, die erforderliche Sollänge der Fühlscheibe 36 ergibt. In einer später noch näher erläuterten Kalibrierstation wird daraufhin die Länge einer Fühlscheibe 36 durch Pressen so verkürzt, daß sie mit der zuvor bestimmten Sollänge übereinstimmt. Die so kalibrierte Fühlscheibe 36 wird dann zum Einbau in den Bremskraftverstärker 10 zur Verfügung gestellt.

Im dargestellten Ausführungsbeispiel ist das Eingangsglied 32 zweiteilig ausgebildet. Seine Kalibrierung ist auf diese Weise erleichtert, da nur sein Endabschnitt in Gestalt der Fühlscheibe 36 kalibriert werden muß. Es ist allerdings ebenso möglich, das Eingangsglied 32 einteilig auszubilden und in einer geeigneten Pressenstation auf die Sollänge zu kalibrieren.

In analoger Weise wird auch das Ausgangsglied 42 kalibriert. Dazu werden zunächst, nach dem erfolgten Einbau einer kalibrierten Fühlscheibe 36, die Reaktionsscheibe 38 und der Reaktionskolben 44 eingebaut, der durch eine Halte- und Führungsklammer 66 am Gehäuse 28 der Steuerventilanordnung 26 gesichert wird. Anschließend wird das Gehäuse 14 des Bremskraftverstärkers 10 durch Verbinden des in Fig. 1 linken halbschalenförmigen Gehäuseteiles 16 mit dem rechten Gehäuseteil 18 komplettiert und die so erhaltende Einheit wird wiederum in eine nicht näher dargestellte Aufnahmevorrichtung eingespannt. Mit einer Meßvorrichtung wird der Abstand zwischen dem freien Ende des Reaktionskolbens 44 und einer zweiten Bezugsfläche 68 auf der Außenseite des Gehäuseteiles 16 bestimmt, an der die Fläche 58 des Befestigungsflansches 60 des Hauptzylinders 12 anliegt, wenn die Bremskraftverstärker/Hauptzylinder-Einheit zusammengebaut ist. Dieses mit Bₒ bezeichnete Maß stellt das Istmaß dar, aus dem sich durch Subtraktion des vorgegebenen Sollmaßes B die geforderte Sollänge für den Reaktionskolbenkopf 46 ergibt. In einer weiteren Kalibrierstation, deren Aufbau später ebenfalls noch näher erläutert ist, wird daraufhin ein Reaktionskolbenkopf 46 durch Pressen in seine Länge so verkürzt, daß er die zuvor bestimmte Sollänge aufweist. Der kalibrierte Reaktionskolbenkopf 46 wird dann mit dem Reaktionskolben 44 verbunden, womit die Montage des Bremskraftverstärkers 10 abgeschlossen ist.

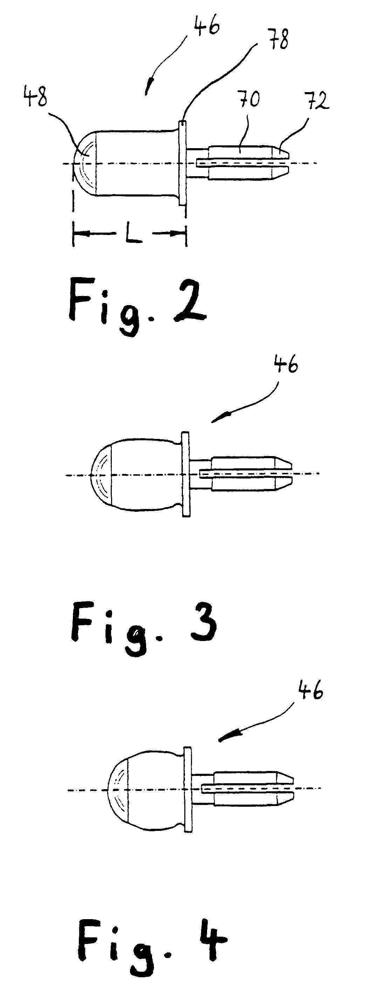

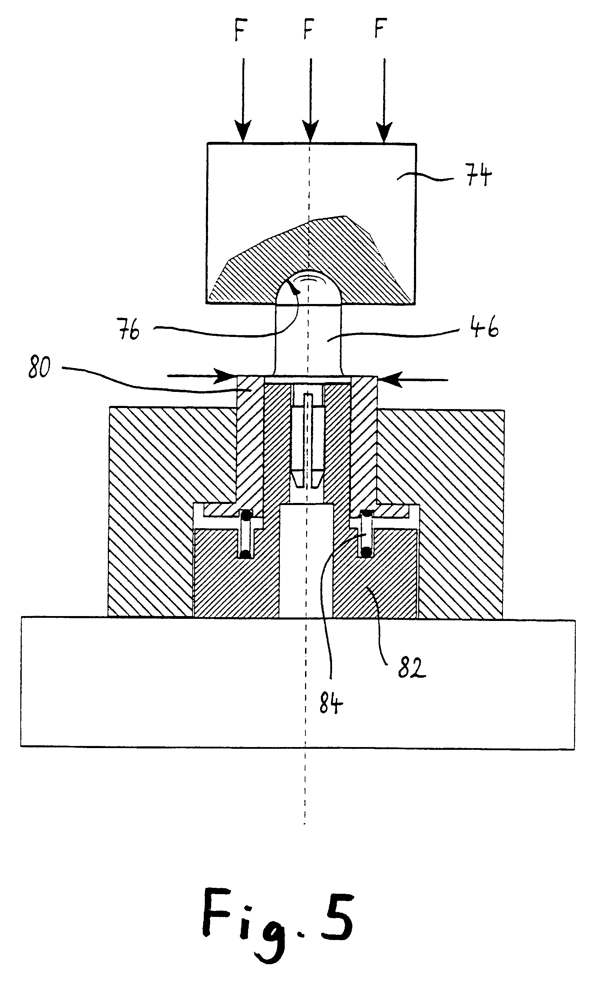

Aus den Figuren 2 bis 4 geht der Aufbau des durch Pressen zu kalibrierenden Reaktionskolbenkopfes 46 hervor, während in Fig. 5 eine zur Umformung des Reaktionskolbenkopfes 46 dienende Presse gezeigt ist, die Teil einer automatischen Kalibrierstation ist.

Fig. 2 zeigt den Reaktionskolbenkopf 46 in einem Zustand vor einer Umformung, d.h. in dem Zustand, in dem er der Presse zugeführt wird und in dem er eine Länge L aufweist, die mindestens der größtmöglichen Sollänge entspricht. Zur Verbindung mit dem Reaktionskolben 44 hat der Reaktionskolbenkopf 46 einen zylinderförmigen, geschlitzten Fortsatz 70 geringeren Durchmessers, der ein abgeschrägtes Ende 72 aufweist, mit dem er in eine entsprechende Ausnehmung des Reaktionskolbens 44 eingeführt werden kann. Die geschlitzte Ausführung des Fortsatzes 70 sichert einen federnd klemmenden Sitz im Reaktionskolben 44.

Fig. 3 zeigt einen Reaktionskolbenkopf 46, dessen ursprüngliche Länge L durch Pressen in axialer Richtung etwas verkürzt worden ist. Der Preßvorgang führt zu einer Materialausbauchung im mittleren Abschnitt des Reaktionskolbenkopfes 46.

Fig. 4 zeigt einen Reaktionskolbenkopf 46, dessen ursprünglichen Länge L durch eine PreßUmformung gegenüber dem in Fig. 3 gezeigten Zustand stärker verkürzt worden ist, was zu einer entsprechend größeren Materialausbauchung im mittleren Abschnitt des Reaktionskolbenkopfes 46 führt.

Wie aus den Figuren 3 und 4 zu ersehen ist, wird die Gestalt des halbkugeligen Endes 48 des Reaktionskolbenkopfes 46 beim Pressen nicht verändert. Damit die Gestalt des Endes 48 unverändert erhalten bleibt, ist der Preßstempel 74 der in Fig. 5 dargestellten Presse mit einer entsprechenden, kalottenförmigen Vertiefung 76 ausgeführt, so daß die Umformkraft in den Reaktionskolbenkopf 46 eingeleitet werden kann, ohne daß sich die halbkugelige Kopfform ändert. Um des weiteren zu verhindern, das während des Preß- bzw. Stauchungsvorgangs des Reaktionskolbenkopfes 46 Materialumformungen in unkontrollierter Weise erfolgen, ist die Basis des Kopfes 46 als radial nach außen wegstehender Ringbund 78 größeren Durchmessers ausgeführt. In der Presse wird dieser Ringbund 78 während des Preßvorgangs von einem Schutzzylinder 80 vollständig und eng umfaßt, während die Unterseite des Kopfes 46 durch eine Pressenaufnahme 82 abgestützt ist. Nach Beendigung des Preß- und Kalibriervorgangs wird die Pressenaufnahme 82 gegen die Kraft einer Feder 84 nach oben bewegt und drückt so den Ringbund 78 aus dem Schutzzylinder 80 heraus. Auf diese Weise findet während des Umformvorgangs in der Presse eine Materialumformung des Reaktionskolbenkopfes 46 nur in dem definierten Bereich zwischen dem halbkugeligen Ende 48 und dem Ringbund 78 statt. Nebenbei führt die in den aus Metall bestehenden Reaktionskolbenkopf 46 eingeleitete Preßkraft zu einer Verdichtung des Materials am halbkugeligen Ende 48 und damit zu einer erhöhten Verschleißfestigkeit in diesem Bereich.

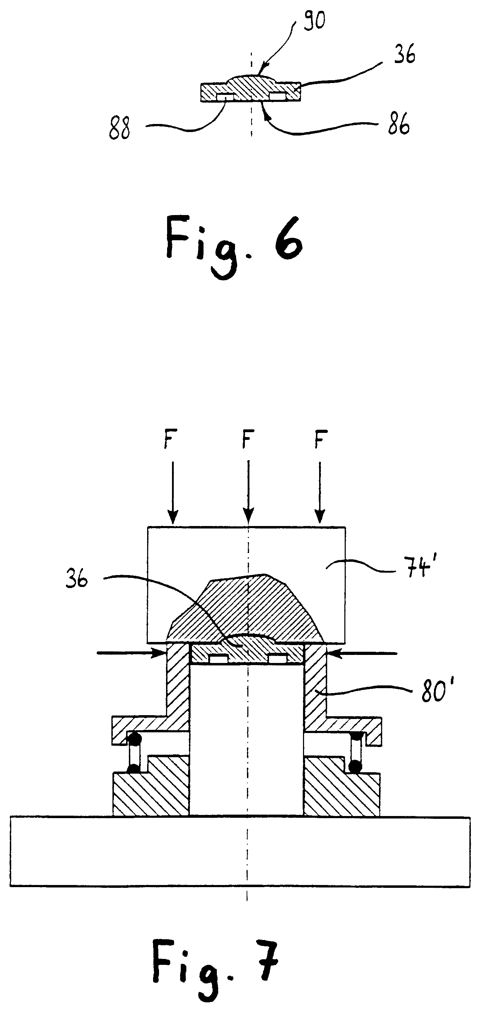

Fig. 6 zeigt eine Fühlscheibe 36, die dazu geeignet ist, durch Einleiten einer axialen Preßkraft in ihrer Länge verkürzt zu werden. Die Fühlscheibe 36 weist in ihrem Boden 86 eine kreisringförmige Ausnehmung 88 rechteckigen Querschnitts auf, in die hinein beim Umformvorgang Material verdrängt werden kann. Statt einer kreisförmigen Ausnehmung können auch eine oder mehrere Ausnehmungen von anderer Gestalt vorgesehen werden, wichtig ist lediglich, daß das Material der Fühlscheibe 36, die bevorzugt ebenfalls aus Metall besteht, in diese Ausnehmungen verdrängt werden kann, wobei die Ausnehmungen die für den beabsichtigten Einsatz erforderliche Stabilität der Fühlscheibe nicht beeinträchtigen dürfen.

In Fig. 7 ist eine zweite Presse dargestellt, mit der die zur Längenanpassung erforderliche Materialumformung der Fühlscheibe 36 durchgeführt werden kann. Auch bei der Fühlscheibe 36 ist es wichtig, das sich weder der Fühlscheibendurchmesser noch die Form der der Reaktionsscheibe 38 zugewandten Fläche der Fühlscheibe ändern. Im vorliegenden Fall hat beispielsweise die Fühlscheibe auf ihrer der Reaktionsscheibe 38 zugewandten Fläche eine linsenförmige Erhebung 90, die bei einer Bremsbetätigung zuerst in die Reaktionsscheibe 38 eindringt und somit zu Beginn der Bremsung zu einem größeren Übersetzungsverhältnis führt. Der Preßstempel 74 ist daher mit einer entsprechenden Ausnehmung versehen, so daß die linsenförmige Erhebung 90 unverändert erhalten bleibt. Analog zur Presse für den Reaktionskolbenkopf 46 hat auch die Presse für die Fühlscheibe 36 einen Schutzzylinder 80, der während des Preßvorgangs die Fühlscheibe eng umschließt und verhindert, das sich deren Durchmesser ändert.

Die in den Figuren 5 und 7 gezeigten Pressen sind Teil einer Kalibrierstation zur automatischen Kalibrierung des Reaktionskolbenkopfes 46 bzw. der Fühlscheibe 36. Die beiden Pressen sind elektronisch mit den zugehörigen Messvorrichtungen und mit einer Recheneinheit verbunden, so daß ohne störende Zeitverzögerung jeweils ein in seiner Länge an einen bestimmten Bremskraftverstärker angepaßter Reaktionskolbenkopf 46 bzw. eine Fühlscheibe 36 erzeugt werden können. Die unkalibrierten Reaktionskolbenköpfe bzw. Fühlscheiben werden den Pressen mittels eines automatisch zuführenden Schwingförderers zur Verfügung gestellt und nach erfolgter Kalibrierung ebenfalls automatisch durch ein Transportsystem an den Montageplatz des Bremskraftverstärkers gebracht. Auf diese Weise ist eine sehr kostengünstige, fehlerfreie und vor allem toleranzarme Herstellung von Bremskraftverstärkern möglich.

## Patentansprüche

1. Bremskraftverstärker, insbesondere Unterdruckbremskraftverstärker (10), mit einem Eingangsglied (32), in das eine Betätigungskraft eingeleitet wird, und einem Ausgangsglied (42) zur Abgabe einer verstärkten Kraft an eine nachgeschaltete Baugruppe,
dadurch gekennzeichnet, daß
die Länge des Eingangsgliedes (32) und/oder des Ausgangsgliedes (42) durch Druckumformung seines Materials auf eine Sollänge kalibriert ist.

2. Bremskraftverstärker nach Anspruch 1,
dadurch gekennzeichnet, daß das Eingangsglied (32) mehrteilig ist und nur ein separater Endabschnitt des Eingangsgliedes einer Druckumformung unterzogen wurde.

3. Bremskraftverstärker nach einen der Ansprüche 1 oder 2,
dadurch gekennzeichnet, daß das Ausgangsglied (42) mehrteilig ist und nur ein separater Endabschnitt des Ausgangsgliedes einer Druckumformung unterzogen wurde.

4. Bremskraftverstärker nach Anspruch 2,
dadurch gekennzeichnet, daß der Endabschnitt des Eingangsgliedes (32) eine Fühlscheibe (36) ist.

5. Bremskraftverstärker nach Anspruch 4,
dadurch gekennzeichnet, daß die Fühlscheibe (36) wenigstens eine Materialaussparung aufweist, die eine Längenänderung der Fühlscheibe (36) durch Druckumformen derselben ohne gleichzeitige Durchmesseränderung ermöglicht.

6. Bremskraftverstärker nach Anspruch 5,
dadurch gekennzeichnet, daß die Materialaussparung eine kreisringförmige Ausnehmung (88) im Boden (86) der Fühlscheibe (36) ist.

7. Bremskraftverstärker nach Anspruch 3,
dadurch gekennzeichnet, daß der Endabschnitt des Ausgangsgliedes (42) der Kopf (46) eines Reaktionskolbens (44) ist.

8. Bremskraftverstärker nach Anspruch 7,
dadurch gekennzeichnet, daß der Kopf (46) des Reaktionskolbens (44) eine als Ringbund (46) ausgebildete Basis aufweist, deren Durchmesser größer ist als der Durchmesser der übrigen Abschnitte des Kopfes (46).

9. Montageverfahren für einen Bremskraftverstärker, insbesondere Unterdruckbremskraftverstärker (10), wobei der Bremskraftverstärker ein Eingangsglied (32), in das eine Betätigungskraft eingeleitet wird, ein Ausgangsglied (42), über das eine verstärkte Kraft an eine nachgeschaltete Baugruppe abgegeben wird, und ein zwischen dem Eingangsglied (32) und dem Ausgangsglied (42) angeordnetes Kraftübermittlungsglied aufweist, mit den Schritten:
- Bereitstellen eines Eingangsgliedes und/oder eines Ausgangsgliedes, dessen bzw. deren Länge mindestens einer größtmöglichen Sollänge entspricht, in einer Kalibrierstation,
- Ermitteln eines Istmaßes zwischen dem Eingangsglied und dem Kraftübermittlungsglied und/oder zwischen dem Ausgangsglied und einer Referenzfläche am Bremskraftverstärker,
- Vergleichen jedes ermittelten Istmaßes mit einem entsprechenden, vorgegebenen Sollmaß zur Bestimmung der Sollänge des Eingangsgliedes und/oder des Ausgangsgliedes,
- Kalibrieren des Eingangsgliedes und/oder des Ausgangsgliedes auf die bestimmte Sollänge durch Druckumformen in der Kalibrierstation, und
- Einbauen des kalibrierten Eingangsgliedes und/oder Ausgangsgliedes in den Bremskraftverstärker.

10. Montageverfahren nach Anspruch 9,
dadurch gekennzeichnet, daß die Umformkraft jeweils eine Funktion der Differenz zwischen dem ermittelten Istmaß und dem vorgegebenen Sollmaß ist.

11. Montageverfahren nach Anspruch 9,
dadurch gekennzeichnet, daß der Druckumformvorgang in der Kalibrierstation weggesteuert abläuft und kontinuierlich mittels einer Wegmessung überwacht wird.

12. Montageverfahren nach einem der Ansprüche 9 bis 11,
dadurch gekennzeichnet, daß das Eingangsglied oder/und das Ausgangsglied mehrteilig ist/sind und daß nur ein Endabschnitt des Eingangsgliedes oder des Ausgangsgliedes dem Kalibriervorgang unterworfen wird.

13. Montageverfahren nach einem der Ansprüche 9 bis 12,
dadurch gekennzeichnet, daß die Gestalt des freien Endes des Eingangsgliedes oder des Ausgangsgliedes sich durch den Kalibriervorgang nicht oder zumindest nicht wesentlich ändert.

14. Montageverfahren nach einem der Ansprüche 9 bis 13,
dadurch gekennzeichnet, daß die Kalibrierstation das Eingangsglied und/oder das Ausgangsglied automatisch entsprechend der Differenz zwischen Ist- und Sollmaß auf die Sollänge kalibriert und anschließend zum Einbau zur Verfügung stellt.

## Claims

1. Brake booster, in particular vacuum brakebposter (10), with an input member (32), into which an actuating force is introduced, and with an output member (42) for transmitting an increased force to a downstream subassembly,
characterised in that the length of the input member (32) and/or of the output member (42) is calibrated to a desired length by the compressive forming of its material.

2. Brake booster according to claim 1,
characterised in that the input member (32) is multipart and only a separate end portion of the input member has been subjected to compressive forming.

3. Brake booster according to one of claims 1 or 2,
characterised in that the output member (42) is multipart and only a separate end portion of the output member has been subjected to compressive forming.

4. Brake booster according to claim 2,
characterised in that the end portion of the input member (32) is a sensing disk (36).

5. Brake booster according to claim 4,
characterised in that the sensing disk (36) has at least one material cut-out which allows a change in length of the sensing disk (36) by the compressive forming of the latter, without a simultaneous change in diameter.

6. Brake booster according to claim 5,
characterised in that the material cut-out is an annular recess (88) in the bottom (86) of the sensing disk (36).

7. Brake booster according to Claim 3,
characterised in that the end portion of the-output member (42) is the head (46) of a reaction piston (44).

8. Brake booster according to Claim 7,
characterised in that the head (46) of the reaction piston (44) has a base which is designed as an annular collar (46) and the diameter of which is larger than the diameter of the remaining portions of the head (46).

9. Method of assembly for a brake booster, in particular a vacuum brake booster (10), the brake booster having an input member (32), into which an actuating force is introduced, an output member (42), via which an increased force is emitted to a downstream subassembly, and a force transmission member arranged between the input member (32) and the output member (42), with the steps:
- provision of an input member and/or an output member, the length of which corresponds at least to a greatest possible desired length, in a calibrating station,
- ascertainment of an actual dimension between the input member and the force transmission member and/or between the output member and a reference face on the brake booster,
- comparison of each ascertained actual dimension with a corresponding predetermined desired dimension for determining the desired length of the input member and/or of the output member,
- calibration of the input member and/or of the output member to the specific desired length by compressive forming in the calibrating station, and
- installation of the calibrated input member and/or output member in the brake booster.

10. Method of assembly according to Claim 9,
characterised in that the forming force is in each case a function of the difference between the ascertained actual dimension and the predetermined desired dimension.

11. Method of assembly according to claim 9,
characterised in that the compressive forming-operation in the calibrating station takes place under travel control and is monitored continuously by means of travel measurement.

12. Method of assembly according to one of claims 9 to 11,
characterised in that the input member and/or the output member are/is multipart, and in that only one end portion of the input member or of the output member is subjected to the calibrating operation.

13. Method of assembly according to one of claims 9 to 12,
characterised in that the shape of the free end of the input member or of the output member does not or at least does not appreciably change as a result of the calibrating operation.

14. Method of assembly according to one of claims 9 to 13,
characterised in that the calibrating station automatically calibrates the input member and/or the output member to the desired length according to the difference between the actual dimension and desired dimension and subsequently makes said member available for installation.

## Revendications

1. Servofrein, en particulier servofrein à dépression (10) comprenant un élément d'entrée (32) par lequel une force d'actionnement est introduite et un élément de sortie (42) pour transmettre une force amplifiée à un groupe constitutif disposé en aval,
caractérisé en ce que
la longueur de l'élément d'entrée (32) et / ou de l'élément de sortie (42) est calibrée par déformation plastique de compression de son matériau à une longueur de consigne.

2. Servofrein selon la revendication 1,
caractérisé en ce que l'élément d'entrée (32) est en plusieurs parties et seule une portion d'extrémité séparée de l'élément d'entrée est soumise à une déformation plastique de compression.

3. Servofrein selon la revendication 1 ou 2,
caractérisé en ce que l'élément de sortie (42) est en plusieurs parties et seule une portion d'extrémité séparée de l'élément de sortie est soumise à une déformation plastique de compression.

4. Servofrein selon la revendication 2,
caractérisé en ce que la portion d'extrémité de l'élément d'entrée (32) est un disque de contact (36).

5. Servofrein selon la revendication 4,
caractérisé en ce que le disque de contact (36) présente au moins un évidement de matière qui permet une modification de longueur du disque de contact (36) par déformation plastique de compression de celui-ci sans modification simultanée du diamètre.

6. Servofrein selon la revendication 5,
caractérisé en ce que l'évidement de matière est un évidement annulaire (88) dans le fond (86) du disque de contact (36).

7. Servofrein selon la revendication 3,
caractérisé en ce que la portion d'extrémité de l'élément de sortie (42) est la tête (46) d'un piston de réaction (44).

8. Servofrein selon la revendication 7,
caractérisé en ce que la tête (46) du piston de réaction (44) présente une base en forme de bourrelet annulaire (46) dont le diamètre est plus grand que le diamètre du reste de la portion de la tête (46).

9. Procédé de montage d'un servofrein, en particulier d'un servofrein à dépression (10), le servofrein présentant un élément d'entrée (32) dans lequel une force d'actionnement est introduite, un élément de sortie (42) par lequel une force amplifiée est transmise à un groupe constitutif disposé en aval et un élément de transmission de force disposé entre l'élément d'entrée (32) et l'élément de sortie (42), comprenant les opérations consistant à :
- réaliser un élément d'entrée et / ou un élément de sortie dont la longueur correspond à une longueur de consigne la plus grande possible, dans un poste de calibrage,
- relever une dimension réelle entre l'élément d'entrée et l'élément de transmission de force et / ou entre l'élément de sortie et une surface de référence sur le servofrein,
- comparer chaque dimension réelle relevée à une dimension de consigne correspondante donnée à l'avance pour déterminer la longueur de consigne de l'élément d'entrée et / ou de l'élément de sortie,
- calibrer l'élément d'entrée et / ou l'élément de sortie à la longueur de consigne déterminée par déformation plastique de compression dans le poste de calibrage, et
- monter l'élément d'entrée et / ou l'élément de sortie calibré dans le servofrein.

10. Procédé de montage selon la revendication 9,
caractérisé en ce que la force de déformation plastique est respectivement une fonction de la différence entre la dimension réelle relevée et la dimension de consigne donnée à l'avance.

11. Procédé de montage selon la revendication 9,
caractérisé en ce que le processus de déformation plastique de compression se déroule de façon télécommandée dans le poste de calibrage et est surveillé en permanence par télémesure.

12. Procédé de montage selon l'une quelconque des revendications 9 à 11,
caractérisé en ce que l'élément d'entrée et / ou l'élément de sortie est / sont en plusieurs parties et en ce que seule une portion d'extrémité de l'élément d'entrée ou de l'élément de sortie est soumise au processus de calibrage.

13. Procédé de montage selon l'une quelconque des revendications 9 à 12,
caractérisé en ce que la configuration de l'extrémité libre de l'élément d'entrée ou de l'élément de sortie n'est pas modifiée ou n'est pas modifiée sensiblement par le processus de calibrage.

14. Procédé de montage selon l'une quelconque des revendications 9 à 13,
caractérisé en ce que le poste de calibrage calibre automatiquement à la longueur de consigne l'élément d'entrée et / ou l'élément de sortie en fonction de la différence entre la dimension réelle et la dimension de consigne et le(s) met ensuite à disposition pour son(leur) montage.
